# EUROPÄISCHE PATENTSCHRIFT

(11) **EP 3 598 199 B1**
(45) Veröffentlichungstag und Bekanntmachung des Hinweises auf die Patenterteilung: **25.06.2025**
(21) Anmeldenummer: 19193504.8
(22) Anmeldetag: 18.09.2017
(51) Int. Cl.: G02B 27/00, G02B 13/04

(54) **OBJEKTIV FESTER BRENNWEITE UND KONSTANTER BAULÄNGE FÜR AUTOFOKUSANWENDUNGEN**
LENS HAVING A FIXED FOCAL LENGTH AND CONSTANT OVERALL LENGTH FOR AUTO FOCUS APPLICATIONS
OBJECTIF DE DISTANCE FOCALE FIXE ET LONGUEUR CONSTANTE POUR APPLICATIONS DE MISE AU POINT AUTOMATIQUE

(30) Priorität: 18.09.2016 DE 102016117547
(43) Veröffentlichungstag der Anmeldung: 22.01.2020
(62) Teilanmeldung aus: 17778176.2
(73) Patentinhaber: Leica Camera AG, 35578 Wetzlar (DE)
(72) Erfinder: Kammans, Sigrun, 35745 Herborn (DE); Stuible, Dietmar, 35578 Wetzlar (DE); Roth, Stefan, 35633 Lahnau (DE)
(74) Vertreter: Stamer, Jan

(56) Entgegenhaltungen:
- US-A1- 2016 178 875

## Beschreibung

Die Erfindung betrifft ein auswechselbares Objektiv fester Brennweite gemäß dem Oberbegriff von Anspruch 1. Aus JP 2012 058682 A, US 2004/017605 A1, JP 2007 298832 A, JP 2011 048232 A, US 2016/0178875 A1 und US 2011/096410 A1 sind gattungsgemäße Objektive bekannt.

Solche Objektive sind für fotografische Bildaufnahmezwecke aus der analogen Fotografie bekannt und werden ebenfalls für die digitale Bildaufnahme genutzt. Zunehmend verfügen digitale Kameras nicht mehr über einen in den Bildaufnahmestrahlengang ein- und ausschwenkbaren Spiegel, der das zu fotografierende Objektfeld zu Scharfstellzwecken und zur Auswahl des Bildausschnitts über ein Prisma in einen Sucher umlenkt, sondern die Bildauswahl erfolgt durch permanente Bildaufnahme mit dem Bildaufnahmesensor und anhand eines daraus gewonnenen auf einem Display an der Rückseite der Kamera dargestellten Objektausschnitts oder mit Hilfe eines elektronischen Suchers (Electronic View Finder). Die Scharfstellung (Fokussierung) dieser Objektive erfolgt mit Hilfe von elektronischen Autofokussignalen und entsprechender Ansteuerung des Fokussiergliedes im Objektiv automatisch. Üblicherweise bestehen fotografische Objektive zur Erzeugung einer guten Abbildungsleistung aus zwei oder mehr Linsengruppen, die wiederum einzelne ortsfest oder entlang der optischen Achse verschiebbar gelagerte Linsenelemente aufweisen. Es ist bekannt, zur Fokussierung des Objektivs auf unterschiedliche Objektentfernungen eine entlang der optischen Achse verschiebbare Linsengruppe vorzusehen. Dies kann beispielsweise der Objektivkopf, also die der Objektebene zugewandte vordere Linsengruppe oder das komplette Objektiv sein. Eine solche Anordnung wird auch Gesamtfokussierung genannt. Bei dieser Art der Fokussierung ändert sich jedoch die Baulänge des Objektivs während der Fokussierung was Nachteile hinsichtlich der Dichtigkeit mit sich bringt. Daher sind auch Objektive bekannt, bei denen ein im Objektiv verschiebbar gelagertes Linsenglied, das sogenannte Fokussierglied entlang der optischen Achse verschoben wird. Eine solche Anordnung wird auch Innenfokussierung genannt. Zwar lassen sich Objektive dieser Bauart in weiten Bereichen von einer unendlichen Objektentfernung bis hin zum Nahbereich von wenigen Metern oder gar Zentimetern fokussieren, das heißt es erfolgt eine scharfe Abbildung des Objektes auf die Bildaufnahmeebene aber gerade im Nahbereich nimmt die optische Abbildungsleistung ab. Optische Bildfehler, wie Verzeichnung, Bildfeldwölbung, Öffnungsfehler, Farbfehler und Koma nehmen zu. Die Bildergebnisse genügen dann trotz einer Fokussierung auf den gewünschten Objektabstand oftmals nicht mehr den Anforderungen an die Abbildungsleistung moderner Bildaufnahmesysteme. Wenn dennoch eine hohe Abbildungsleistung erreicht werden soll sind komplizierte und teure Objektivkonstruktionen mit einer hohen Anzahl unterschiedlicher Linsen notwendig. Alternativ ist es bekannt zur Erhöhung der Abbildungsleistung bei Objektiven mit Gesamtfokussierung, vornehmlich im Nahbereich, ein zweites bewegliches Linsenelement, ein sogenanntes Floatelement vorzusehen, welches den Abbildungsfehlern entgegenwirkt im Übrigen aber keinen Einfluss auf die Fokuslage hat.

Um Objektive variabler Brennweiten (Zoom-Objektive) zu realisieren, werden meist mindestens zwei, auf Kurven relativ zueinander verstellbare Linsenelemente oder Linsengruppen vorgesehen. Die Fokussierung erfolgt nach wie vor mit einem zur Fokussierung verstellbaren Fokuselement. Bei solchen bekannten Objektiven übernimmt demnach eine Gruppe aus zwei Linsengruppen die Brennweitenveränderung und davon unabhängig wird eine weitere Linsengruppe zur Fokussierung verwendet.

Ein solches Objektiv mit veränderbarer Brennweite ist zum Beispiel aus US 2013/0070124 A1 bekannt. Dieses Objektiv weist zur Brennweiten und Fokusveränderung drei bewegbare Linsengruppen auf.

Aus US 8,619,374 B2 ist ein auswechselbares Objektiv mit veränderbarer Brennweite bekannt. Auf eine feststehende Frontlinsengruppe folgt eine axial verstellbare Linsengruppe zur Brennweitenänderung. Zwischen zwei weiteren feststehenden Linsengruppen sind zwei unabhängig voneinander verstellbare Fokussier-Linsengruppen eingefügt. Mit Hilfe der beiden Fokussier-Linsengruppen sollen in Abhängigkeit von der Brennweitenänderung entstehende Abbildungsfehler ausgeglichen werden.

Der Erfindung lag die Aufgabe zugrunde, bei auswechselbaren Objektiven mit fester Brennweite eine sehr hohe konstante Bildqualität bei der Fokussierung auf unterschiedliche Objektentfernungen von Unendlich bis in den extremen Nahbereich unter 30 cm oder mit einem Abbildungsmaßstab von bis zu 1:3 zu ermöglichen, wobei die zur Fokussierung benötigten Linsen einen einfachen Aufbau mit geringem Gewicht aufweisen sollten, um einen schnellen und leisen Autofokusantrieb mit hohen Beschleunigungen erreichen zu können. Weiterhin sollten die Objektive zur Verwendung an spiegellosen Aufnahmesystemen mit kurzem Auflagemaß geeignet sein, eine kurze Schnittweite aufweisen und gleichzeitig einen ausreichend großen Abstand zwischen Austrittspupille des Objektivs und der Abbildungsebene aufweisen. Zur Eignung für moderne Bildsensoren sollte der Lichteinfallswinkel in der Abbildungsebene, vom Lot her betrachtet, nicht zu groß werden.

Diese Aufgabe wird erfindungsgemäß durch die kennzeichnenden Merkmale des Anspruchs 1 gelöst. Vorteilhafte Weiterbildungen ergeben sich aus den Merkmalen der Unteransprüche.

Zu den in den Ansprüchen angegebenen Lösungsmerkmalen ist zu beachten, dass beim modernen Optik-Design üblicherweise automatische Korrektionsprogramme, wie z.B. "Code V" von Optical Research Associates, eingesetzt werden, die in der Lage sind, aus vorgegebenen Linsenfolgen und Brechkraftverteilungen Vorschläge für funktionsfähige Objektivsysteme mit einem für eine bestimmte Aufgabe optimierten Korrektionszustand zu berechnen. Aufgrund gezielter Veränderungen der angegebenen Parameter durch den Optikkonstrukteur wird der automatisch erreichte Korrektionszustand jeweils weiter verbessert.

Mit den Merkmalen des Anspruchs 1 lassen sich auf diese Weise bereits die Konstruktionsdaten für Radien, Linsendicken, Linsenabstände, Brechzahlen und Abbézahlen der einzusetzenden optischen Gläser gewinnen. Bei Berücksichtigung der in den Unteransprüchen angegebenen Merkmale lassen sich die Konstruktionsparameter schrittweise gezielt verbessern.

In der Zeichnung sind Ausführungsbeispiele des erfindungsgemäßen Objektivs maßstäblich dargestellt, Konstruktionsdaten können den jeweiligen Figuren zugeordneten Tabellen entnommen werden. Für den Fachmann, einen Optikkonstrukteur, ist ersichtlich, dass der konstruktive Aufwand für erfindungsgemäße Objektive sinkt, wenn dafür eine geringere optische Abbildungsleistung akzeptiert wird.

Das wesentliche Lösungsmerkmal erfindungsgemäßer Objektive besteht darin, zwei entlang einer optischen Achse in Bezug auf eine Abbildungsebene verschiebbar gelagerte Fokussier-Linsengruppen in einem Objektivtubus vorzusehen, wobei eine Fokussiervordergruppe von der Objektseite her gesehen vor und eine Fokussierhintergruppe von der Objektseite her gesehen hinter einer feststehenden Mittelgruppe mit Linsen und Aperturblende (Irisblende) angeordnet sind. Durch die Steuerung der beiden Fokussier-Linsengruppen gemeinsam relativ zueinander und zu den ortsfest im Objektivtubus angeordneten übrigen Linsengruppen wird der beim Fokussieren auf unterschiedliche Objektentfernungen eingeführte Gang der Bildfehler vorteilhaft gegenseitig ausgeglichen. Zusätzlich weist ein erfindungsgemäßes Objektiv eine von der Objektseite her gesehen ortsfeste Front- und eine ortsfeste, der Abbildungsebene zugewandte Hinterlinsengruppe auf. Auf diese Weise wird ein Objektiv fester Brennweite realisiert, welches aus fünf Linsengruppe besteht, von denen drei ortsfest und zwei zu Fokussierzwecken entlang der optischen Achse verschiebbar gelagert sind.

Im Gegensatz zu Objektiven mit Gesamtfokussierung mit Floating Element übernehmen bei der erfindungsgemäßen Fokussierung (nachfolgend auch Doppelfokussierung genannt) die beiden Fokussier-Linsengruppen gemeinsam die Verschiebung der Fokuslage zur Fokussierung der Objektebene auf die Abbildungsebene. Der Hub der Fokussiergruppen für eine Fokussierung von Unendlich in die Naheinstellung (maximaler Verfahrweg entspricht dem Gesamthub) ist durch die mechanische Baulänge des Objektivs und das Motor-/Antriebskonzept des Autofokus beschränkt. Das Verhältnis der beiden jeweiligen Gesamthübe zueinander kann dabei 1 oder auch ungleich 1 sein. Es ergibt sich aus konstruktionsbedingten räumlichen Beschränkungen und kann zur Optimierung der Aberrationen variiert werden. Erfindungsgemäß weisen dabei die Frontlinsengruppe und die Hinterlinsengruppe negative Brechkraft auf, oder die Frontlinsengruppe und die Hinterlinsengruppe positive Brechkraft auf. In einer alternativen Ausführungsform weisen die Frontlinsengruppe positive und die Hinterlinsengruppe negative Brechkraft auf oder die Frontlinsengruppe negative und die Hinterlinsengruppe positive Brechkraft auf.

Bei einer besonderen Ausführungsform der Objektive weisen sowohl die Fokussiervordergruppe G2 als auch die Fokussierhintergruppe G4 positive Brechkraft auf und entfernen sich beim Fokussieren von Unendlich in die Naheinstellung von der Abbildungsebene IM.

Bei Kleinbildformat-Objektiven mit Brennweiten z.B. zwischen 55mm bis 185mm werden in der Frontlinsengruppe vorteilhaft mehr Linsen mit positiver Brechkraft als mit negativer Brechkraft verwendet, wobei die Frontlinsengruppe eine positive Gesamtbrechkraft aufweist.

Bei erfindungsgemäßen Objektiven mit Mittelgruppen positiver Gesamtbrechkraft wird eine günstige Verteilung der Brechkräfte in der hinteren Baugruppe und die Einhaltung konstruktiver Vorgaben gewährleistet, die sich beispielsweise aus den vorgegebenen maximalen Außenmaßen des Objektivs, den vorgegebenen maximalen Blenden- und Linsendurchmessern und aus den beschränkenden Maßen eines Kamerabajonetts, insbesondere dessen freien Innendurchmessers ergeben.

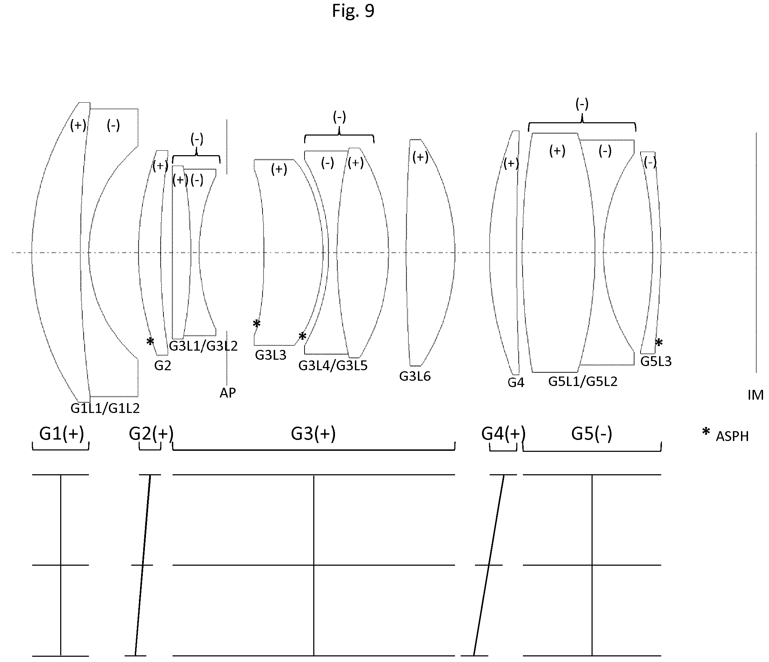

Ein Ausführungsbeispiel eines erfindungsgemäßen Objektivs ist in Fig. 9 der Zeichnung dargestellt und wird anhand der mit Fig. 9 bezeichneten Tabelle mit Brennweitenangaben [f'] für die fünf Linsengruppen und Brechkraftwerten [Dpt.] noch genauer beschrieben.

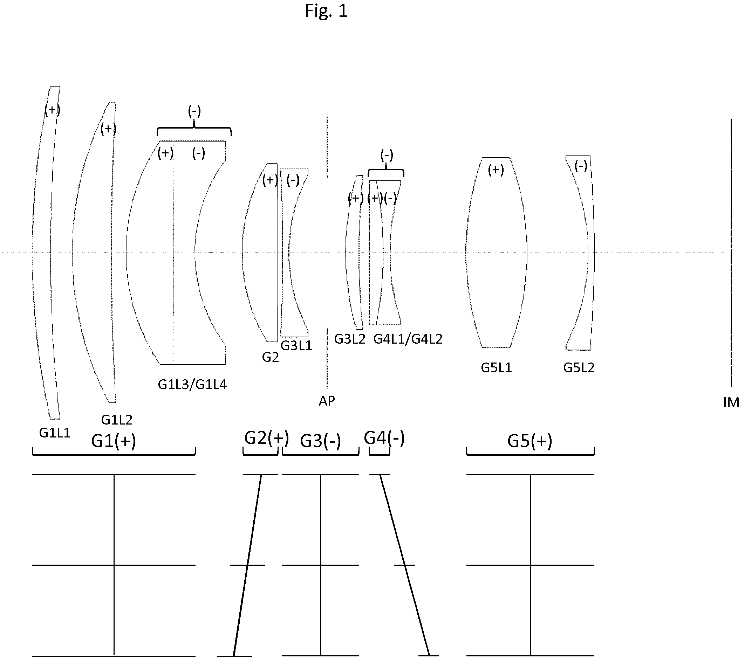

Die Figuren 1 bis 8 mit zugehörigen Tabellen und zugehöriger Beschreibung dienen der Erklärung des grundsätzlichen Aufbaus aus fünf Linsengruppen mit zwei Fokusgruppen und sind nicht Teil der vorliegenden Erfindung.

Auf diese Weise lassen sich bevorzugt z.B. ein 24mm, 50mm oder 90mm Objektiv mit Offenblendenzahl 2,0, aber auch 50mm mit einer Offenblendenzahl von 1,4, realisieren, wobei sich die Brennweitenangabe in diesem Fall auf das Kleinbildformat (Bildkreisdurchmesser 43,3 mm) beziehen. Für den Fachmann ist es möglich, unter Einhaltung der in den Patentansprüchen angegebenen Parameter, Objektive mit kleinerer (bis z.B. 0,9) oder größerer (z.B. 4,0) Offenblendenzahl zu realisieren. Bei kleinerer Offenblendenzahl steigt der konstruktive Aufwand, welches ungünstige Auswirkungen auf das Objektivvolumen, die Zahl der nötigen Linsen und die Linsendurchmesser hat, wenn die optische Abbildungsleistung (Aberrationen) nicht zu stark nachlassen soll. Bei größerer Offenblendenzahl dagegen sinkt üblicherweise bei gleichbleibender oder schlechterer Abbildungsleistung der konstruktive Aufwand.

Eine Skalierung der geometrischen Daten des Objektivs auf andere Bildformate ist unter Beibehaltung der jeweiligen Offenblendenzahl möglich und bewirkt eine entsprechende Skalierung der Brennweite. Auf diese Weise realisierte Objektive, mit ansonsten bezüglich der Erfindung übereinstimmenden konstruktiven Merkmalen sind ebenfalls Gegenstand der Erfindung.

In einer besonderen Ausführungsform des erfindungsgemäßen Objektivs liegen das Verhältnis f1/f der Brennweiten f1 der Frontlinsengruppe und f des gesamten Objektivs zwischen -40 und 30, das Verhältnis f2/f der Brennweiten f2 der Fokussiervordergruppe und f des gesamten Objektivs zwischen -10 und 20, das Verhältnis f3/f der Brennweiten f3 der Mittelgruppe und f des gesamten Objektivs zwischen -30 und 40 , das Verhältnis f4/f der Brennweiten f4 der Fokussierhintergruppe und f des gesamten Objektivs zwischen -10 und 20 und das Verhältnis f5/f der Brennweiten f5 der Hinterlinsengruppe und f des gesamten Objektivs zwischen -40 und 30.

In einem ersten Optimierungsschritt des Verhältnisses f1/f hat sich die Einschränkung auf einen Bereich zwischen -2,0 und -0,8 oder zwischen 0,4 und 5,0 als günstig erwiesen. Um eine übermäßige Empfindlichkeit hinsichtlich einzuhaltender Montagetoleranzen zu vermeiden, ist es besonders vorteilhaft, das Verhältnis betragsmäßig nach unten (betragsmäßig kleine Werte) zu beschränken, und um eine möglichst kompakten Baugröße zu erreichen, ist das Verhältnis f1/f betragsmäßig nach oben (betragsmäßig große Werte) zu beschränken. Eine hinsichtlich Montagetoleranzen und Baugröße optimierte Ausführung der Erfindung weist daher ein Verhältnis f1/f von -1,7 und -1,0 bzw. dazwischen liegender Werte oder von 0,5 und 2,1 bzw. dazwischen liegender Werte auf.

Bei einer besonderen Ausführungsform des erfindungsgemäßen Objektivs kann eine Verringerung des Fokussierhubes der Fokussiervordergruppe und der Baulänge des Objektivs durch eine Einschränkung des Verhältnisses f2/f auf einen Bereich zwischen -1,0 und -0,3 oder zwischen 1,0 und 10,0 erreicht werden. Im Allgemeinen sind kleine Fokussierhübe vorteilhaft für eine schnelle Fokussierung, sie erhöhen jedoch auch die Toleranzempfindlichkeit. Ein zu großer Fokussierhub hingegen erhöht einerseits die Baulänge und erfordert andererseits leistungsstarke und schnelle motorische Antriebe mit hohem Energieverbrauch für die Fokussierung. Für eine erfindungsgemäße Doppelfokussierung ist deshalb die Einschränkung des Verhältnisses f2/f auf -0,7 und -0,4 oder 1,3 und 5,6 , bzw. einen Bereich zwischen einem der beiden vorgenannten Bereiche besonders vorteilhaft.

Eine in gleicher Weise für die Fokussierhintergruppe durchgeführte vorteilhafte Optimierung zeigt sich bei einer Einschränkung des Verhältnisses f4/f auf einen Bereich zwischen -5,0 und 5,0 wobei sich eine weitere Optimierung durch eine Einschränkung auf -1,9 und -0,8 oder auf 0,6 und 0,9, bzw. einen Bereich zwischen -1,9 und -0,8 oder zwischen 0,6 und 0,9 erreichen lässt.

Eine vorteilhafte Ausgestaltung der Linsen der Mittelgruppe hinsichtlich Fertigungstoleranzen und Baugröße wird durch eine Einschränkung des Verhältnisses f3/f auf einen Bereich zwischen -2,0 und -0,5 oder 0,2 und 5,0 erzielt, wobei eine erfindungsgemäße Optimierung bei einem Verhältnis f3/f von -1,2 und -1,0 oder 0,4 und 3,4, bzw. in einem Bereich zwischen -1,2 und -1,0 oder zwischen 0,4 und 3,4 liegt.

Bei betragsmäßig großen Werten des Verhältnisses f5/f der Hinterlinsengruppe ergibt sich eine ungünstig große Baulänge, bei betragsmäßig kleinen Werten wird die Linsengruppe empfindlich hinsichtlich Montagetoleranzen. Eine vorteilhafte Optimierung besteht daher in einer Einschränkung des Verhältnisses f5/f auf einen Bereich zwischen -28,0und -0,6 oder zwischen 0,5 und 10,0. Insbesondere bei Objektiven für spiegellose photographische Kameras, bei denen erfahrungsgemäß sehr kurze Abstände zwischen der in Lichtrichtung letzten (nahe der Abbildungsebene gelegenen) Linse und der Abbildungsebene vorliegen, ist es von Vorteil, den Lichteinfallswinkel, vom Lot auf die Abbildungsebene her betrachtet, nicht zu groß auszuführen. Ein Lichteinfallswinkel kleiner 35° hat sich als vorteilhaft erwiesen. Die Objektive sind damit für Kamerasysteme mit kurzem Auflagemaß und kurzer Schnittweite, z.B. jeweils kleiner 25mm, bezogen auf das zuvor beschriebene Kleinbildformat, besonders geeignet. Betragsmäßig zu kleine Werte des Verhältnisses f5/f wirken sich daher ungünstig aus, da sie den Lichteinfallswinkel erhöhen und damit die Vignettierung zunimmt. Eine bezüglich dieser Problematik optimierte Ausführung des Objektivs weist daher für das Verhältnis f5/f Werte von -21,0 und -0,8 oder 0,8 und 5,2 , bzw. einen Wert jeweils im Bereich dazwischen auf.

In einer erfindungsgemäßen Weiterbildung weist das Objektiv ein Verhältnis der Gesamtbrennweite f zum Bildkreisdurchmesser in der Abbildungsebene (IM) zwischen 0,3 und 5 auf. Auf diese Weise lassen sich Objektive mit einem ausreichend großen Abstand zwischen der Austrittspupille und der Abbildungsebene, z.B. größer 40mm , und mit einer Brennweite zwischen 13mm und 216,5mm, bezogen auf das zuvor beschriebene Kleinbildformat, realisieren.

Vorteilhaft für eine hohe Fokussiergeschwindigkeit sind leichte Fokussiergruppen. Ein Verhältnis des Volumens V jeweils der Fokussiervorder- und Fokussierhintergruppe zum Bildkreisdurchmesser in der Abbildungsebene ist in der dritten Potenz kleiner als 0,1 (V / Bd3 < 0,1) und liegt insbesondere unter 0,08 (V / Bd3 < 0,08). Besonders vorteilhaft weist die jeweilige Fokussiergruppe ein Gewicht von unter 10 g (Gramm) auf.

Der Wert für das relative Volumen von 0,08 entspricht dann, bezogen auf das Kleinbildformat, bei einem leichten Glas, wie zum Beispiel N-PSK53A der Firma Schott, einem Gewicht von 23,2 g und bei einem schweren Glas, wie zum Beispiel N-LASF31A der Firma Schott, einem Gewicht von 35,8 g. Bei Mittelformatsystemen mit 1,5 fach größerem Bildkreisdurchmesser ergeben sich somit Linsengewichte von 78,3 g bei einem leichten Glas bzw. 120,8 g bei einem schweren Glas. Bei APS-Systemen mit 1,5 fach kleinerem Bildkreisdurchmesser ergeben sich somit Linsengewichte von 6,9 g bei einem leichten Glas bzw. 10,6 g bei einem schweren Glas.

Ein geringes Gewicht ist vorteilhaft für die Fokussiergeschwindigkeit und wirkt sich vorteilhaft auf Motor- und Geräuschkonzepte aus.

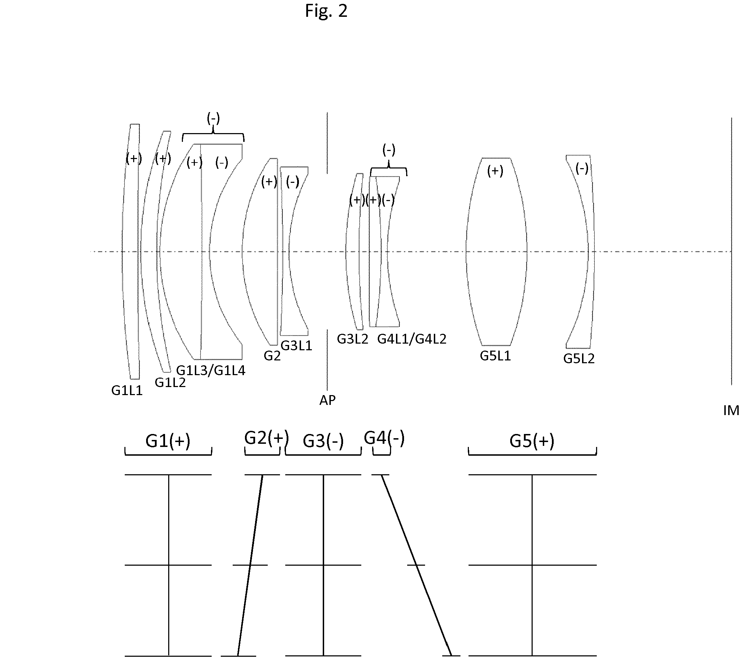

In einer besonderen Ausführungsform eines Objektivs besteht die Frontlinsengruppe aus vier Linsengliedern, wobei das erste Linsenglied, das zweite Linsenglied und das dritte Linsenglied positive und das vierte Linsenglied negative Brechkraft aufweisen, wobei das dritte Linsenglied und das vierte Linsenglied zu einem Linsenduplett mit negativer Gesamtbrechkraft zusammengefasst sind. Ein Ausführungsbeispiel mit einer erfindungsgemäßen Frontlinsengruppe ist als Objektiv 1:2 90mm und 1:2 75 in Fig. 1 und 2 der Zeichnung dargestellt und wird anhand der zugeordneten Tabellen mit Brennweitenangaben [f'] und Brechkraftwerten [Dpt.] noch genauer beschrieben.

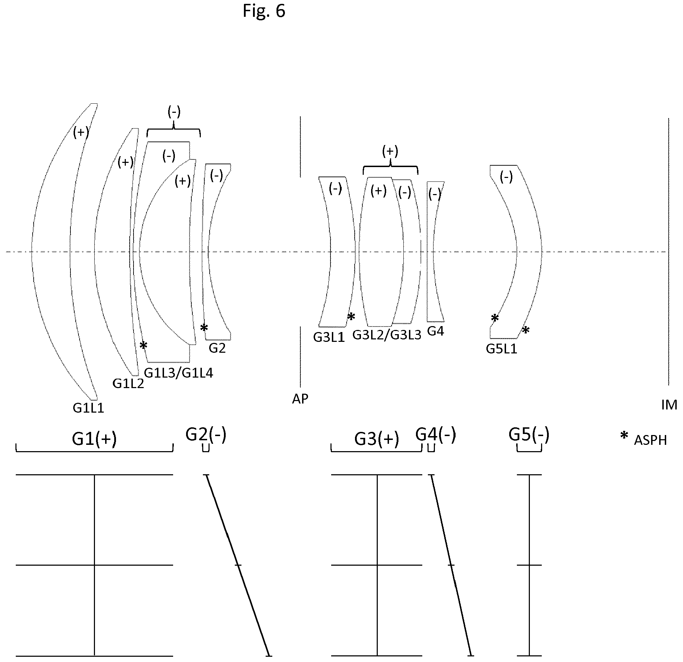

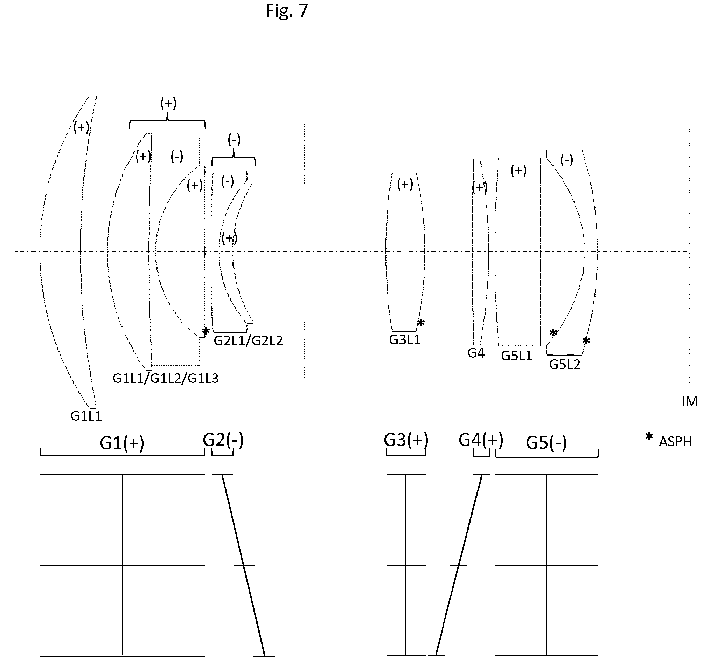

Die Frontlinsengruppe besteht bei einem alternativen Objektiv aus vier Linsengliedern, wobei das erste Linsenglied und das zweite Linsenglied positive, das dritte Linsenglied negative und das vierte Linsenglied positive Brechkraft aufweist, wobei entweder das dritte Linsenglied und das vierte Linsenglied zu einem Linsenduplett mit negativer Gesamtbrechkraft zusammengefasst sind oder das zweite Linsenglied, dritte Linsenglied und das vierte Linsenglied zu einem Kittglied mit positiver Gesamtbrechkraft zusammengefasst sind. In der Zeichnung findet sich dazu in Fig. 6 und Fig. 7 genauer erläuterte Ausführungsbeispiele, die als 1:2 90mm Objektive anhand der zugeordneten Tabellen mit Brennweitenangaben [f'] und Brechkraftwerten [Dpt.] noch genauer beschrieben werden.

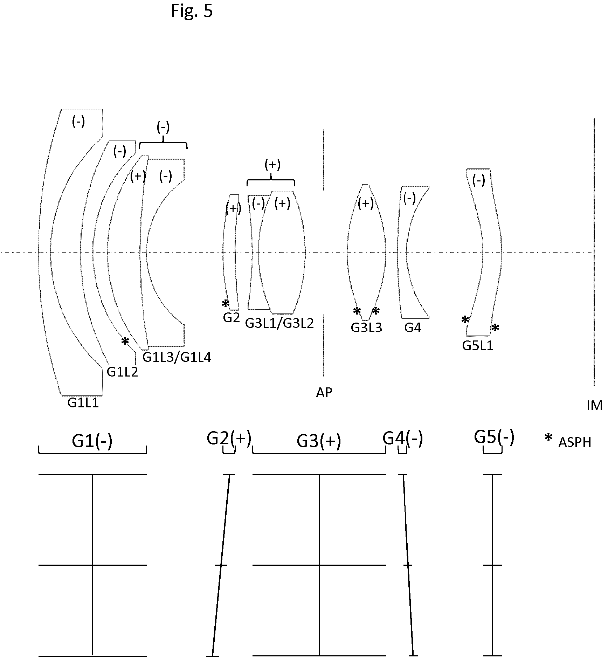

In einem anderen Ausführungsbeispiel besteht die Frontlinsenguppe auch aus vier Linsengliedern, wobei das erste Linsenglied und das zweite Linsenglied negative, das dritte Linsenglied positive und das vierte Linsenglied negative Brechkraft aufweist. In diesem Beispiel sind das dritte und das vierte Linsenglied zu einem Linsenduplett mit negativer Gesamtbrechkraft zusammengefasst. In der Zeichnung ist dazu in Fig. 5 mit zugehöriger Tabelle ein 1:2,0 24mm Objektiv mit genauen Gruppenbrennweiten und Brechkraftwerten angegeben.

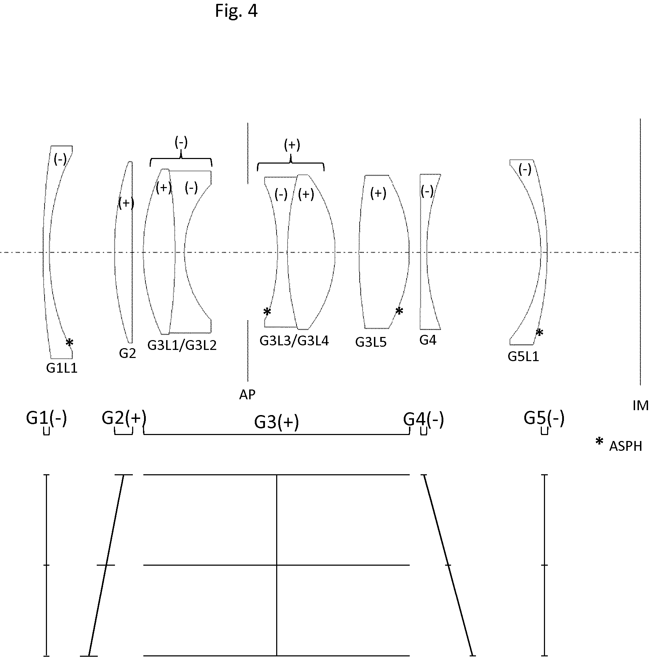

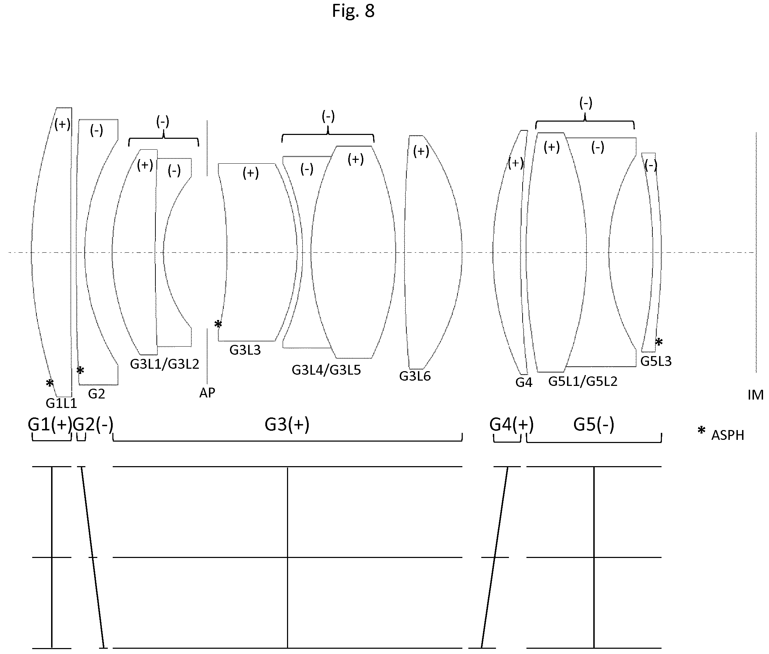

Die Frontlinsengruppe beisteht bei einem weiteren Objektiv aus nur einem Linsenglied welches negative oder positive Brechkraft aufweist. Zu diesem Beispiel werden in Fig. 4 ein 1:2,0 50mm und Fig. 8 ein 1:1,4 50mm Objektiv und mit den jeweiligen Tabellen genauere Werte angegeben.

Bei einer weiteren Ausführungsform des erfindungsgemäßen Objektivs besteht die Frontlinsengruppe aus zwei Linsengliedern, wobei das erste Linsenglied positive und das zweite Linsenglied negative Brechkraft aufweist und beide zu einem Linsenduplett mit positiver Gesamtbrechkraft zusammengefasst sind. Fig. 9 der Zeichnung zeigt ein entsprechendes Ausführungsbeispiel, welche als 1:1,4 50mm Objektiv anhand der zugehörigen Tabelle noch genauer beschrieben wird.

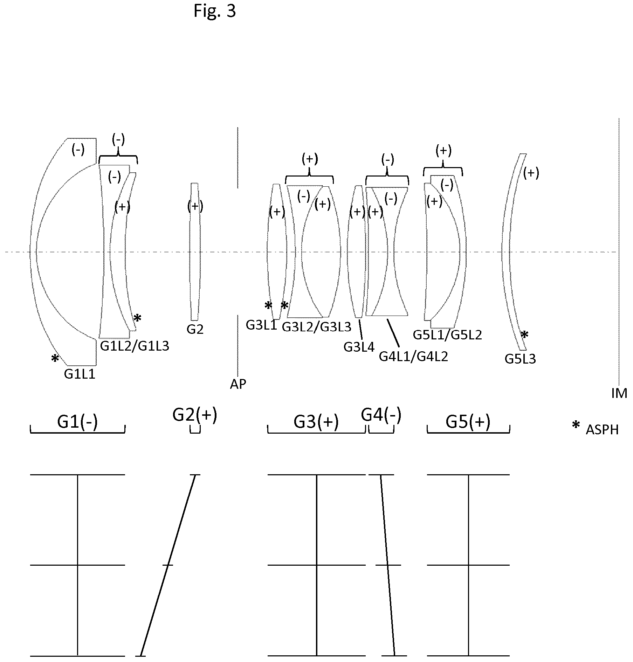

Bei einer weiteren Ausführungsform eines Objektivs besteht die Frontlinsengruppe aus drei Linsengliedern, wobei das erste Linsenglied und das zweite Linsenglied negative und das dritte Linsenglied positive Brechkraft aufweist. Das zweite und das dritte Linsenglied sind dabei zu einem Linsenduplett mit negativer Gesamtbrechkraft zusammengefasst. In der Zeichnung ist mit Fig. 3 ein Ausführungsbeispiel eines 1:2,0 50mm mit zugehöriger Tabelle genauer beschrieben.

In einer vorteilhaften Ausbildung eines Objektivs besteht die Mittelgruppe aus einem Linsenelement positiver Brechkraft wobei die Irisblende AP ortsfest davor angeordnet ist. In der Zeichnung ist mit Fig. 7 ein Ausführungsbeispiel eines 1:2,0 50mm mit zugehöriger Tabelle genauer

Bei einer Weiterbildung der Mittelgruppe besteht diese aus zwei Linsengliedern, wobei das erste Linsenglied negative und das zweite Linsenglied positive Brechkraft aufweist und die Irisblende AP ortsfest zwischen dem ersten und dem zweiten Linsenglied angeordnet ist. Die Figuren 1 und 2 zeigen eine solche Mittelgruppe.

In einer alternativ optimierten Ausführung der Mittelgruppe besteht diese aus drei Linsengliedern, wobei das erste Linsenglied negative, das zweite Linsenglied positive und das dritte Linsenglied positive Brechkraft aufweist. Das erste und das zweite Linsenglied sind dabei zu einem Linsenduplett mit positiver Gesamtbrechkraft zusammengefasst, und die Irisblende AP ist in einem in Fig. 5 dargestellten Beispiel ortsfest zwischen dem Linsenduplett und dem dritten Linsenglied angeordnet.

In einer weiteren aus drei Linsengliedern bestehenden Mittelgruppe weist das das erste Linsenglied negative, das zweite Linsenglied positive und das dritte Linsenglied negative Brechkraft auf. Das zweite und das dritte Linsenglied sind zu einem Linsenduplett mit positiver Gesamtbrechkraft zusammengefasst. Bei dem in Fig. 6 gezeigten Beispiel und die Irisblende AP ortsfest vor dem ersten Linsenglied angeordnet.

Bei einer alternativen Ausführungsform, besteht die Mittelgruppe aus vier Linsengliedern, wobei das erste Linsenglied positive, das zweite negative, das dritte und das vierte Linsenglied positive Brechkraft aufweist. Das zweite und das dritte Linsenglied sind dabei zu einem Linsenduplett mit positiver Gesamtbrechkraft zusammengefasst, wobei die Irisblende AP ortsfest vor dem ersten Linsenglied angeordnet ist. Figur 3 zeigt ein solches Ausführungsbeispiel.

In Figur 4 ist ein Ausführungsbeispiel mit einer aus fünf Linsengliedern bestehenden Mittelgruppe dargestellt. Das erste Linsenglied weist positive und das zweite Linsenglied negative Brechkraft auf, beide sind zu einem Linsenduplett mit negativer Gesamtbrechkraft zusammengefasst. In dieser Ausführungsform weist das dritte Linsenglied negative und das vierte Linsenglied positive Brechkraft auf, wobei beide zu einem Linsenduplett mit positiver Gesamtbrechkraft zusammengefasst sind. Das fünfte Linsenglied weist positive Brechkraft auf und die Irisblende AP ist ortsfest zwischen den beiden Linsendupletts angeordnet.

Bei einer alternativen Ausführungsform besteht die Mittelgruppe aus sechs Linsengliedern, wobei das erste Linsenglied positive und das zweite Linsenglied negative Brechkraft aufweist und beide zu einem ersten Linsenduplett mit negativer Gesamtbrechkraft zusammengefasst sind. Das dritte Linsenglied weist positive, das vierte Linsenglied negative und das fünfte Linsenglied positive Brechkraft auf, wobei das vierte und fünfte Linsenelement zu einem zweiten Linsenduplett mit negativer Gesamtbrechkraft zusammengefasst. Das sechste Linsenglied weist positive Brechkraft auf. Bei dem in den Figuren 8 und 9 dargestellten Beispiel ist die Irisblende AP ortsfest zwischen dem ersten Linsenduplett und dem dritten Linsenglied angeordnet.

In einer besonderen Ausführungsform des erfindungsgemäßen Objektivs besteht die Hinterlinsengruppe aus drei Linsengliedern, wobei das erste Linsenglied positive und das zweite Linsenglied negative Brechkraft aufweist und beide zu einem Linsenduplett mit negativer Gesamtbrechkraft zusammengefasst sind. Das dritte Linsenglied weist bei einem in Fig. 9 dargestellten Ausführungsbeispiel negative Brechkraft auf.

Bei einer weiteren Ausführungsform des Objektivs besteht die Hinterlinsengruppe ebenfalls aus drei Linsengliedern, wobei das erste Linsenglied positive und das zweite Linsenglied negative Brechkraft aufweist und beide zu einem Linsenduplett mit positiver Gesamtbrechkraft zusammengefasst sind. In einem in Fig. 3 gezeigten Ausführungsbeispiel weist das dritte Linsenglied positive Brechkraft auf.

Eine alternative Ausführungsform weist eine Hinterlinsengruppe mit zwei Linsengliedern auf. Die in den Figuren 1, 2 und 7 gezeigten Ausführungsbeispiele weisen im ersten Linsenglied positive und im zweiten Linsenglied jeweils negative Brechkraft auf.

Eine aus nur einem Linsenelement negativer Brechkraft aufgebauten Hinterlinsengruppe ist jeweils in den Figuren 4, 5 und 6 beispielhaft dargestellt.

Besonders vorteilhaft können zur Korrektur von monochromatischen Abbildungsfehlern, wie Öffnungsfehler, Koma, Astigmatismus, Wölbung und Verzeichnung eine oder mehrere Linsenglieder, mit einer oder zwei asphärischen Flächen vorgesehen sein.

Bei den in der Zeichnung aufgeführten Ausführungsbeispielen sind diese in den Figuren 3, 4, 5, 6, 7, 8 und 9 mit einem * gekennzeichnet.

Um eine für spiegellose Aufnahmesysteme geeignete kurze Schnittweite (z.B. kleiner 25mm, bezogen auf das Kleinbildformat) und für Bildaufnahmesensoren geeignete Lage der Austrittpupille gewährleisten zu können, können die Hinterlinsengruppen mindestens eine Linse mit einem optischen Material mit Brechzahl ne größer 1,8 aufweisen. Auf diese Weise lassen sich auch Beschränkungen für die maximalen Durchmesser der Linsen aufgrund vom Kamera- oder Bildaufnahmesystem vorgegebener, begrenzender Durchmesser, z.B. eines Bajonetts, einhalten.

Die einzeln dargestellten und beschriebenen fünf Linsengruppen stellen in allen Objektivvarianten einen im Einzelnen notwendigen, in sich abgeschlossenen Bestandteil dar. Jede der Linsengruppen kann für sich optisch abgestimmt werden, was insbesondere durch das für jede Linsengruppe angegebene Brennweitenverhältnis zur Gesamtbrennweite zum Ausdruck kommt.

In der Zeichnung sind Ausführungsbeispiele der erfindungsgemäßen Objektive für das Kleinbildformat schematisch dargestellt und werden nachfolgend anhand der Figuren genauer beschrieben.

Dabei zeigen
- Fig. 1: einen Linsenschnitt durch ein Objektiv mit der Brennweite 90mm und Offenblendenzahl 2,
- Fig. 2: einen Linsenschnitt durch ein Objektiv mit der Brennweite 75mm und Offenblendenzahl 2,
- Fig. 3 und 5: einen Linsenschnitt durch je ein Objektiv mit der Brennweite 24mm und Offenblendenzahl 2,
- Fig. 4: einen Linsenschnitt durch ein Objektiv mit der Brennweite 50mm und Offenblendenzahl 2
- Fig. 6 und 7: einen Linsenschnitt durch ein Objektiv mit der Brennweite 90mm und Offenblendenzahl 2,
- Fig. 8 und 9: einen Linsenschnitt durch je ein Objektiv mit der Brennweite 50mm und Offenblendenzahl 1,4,

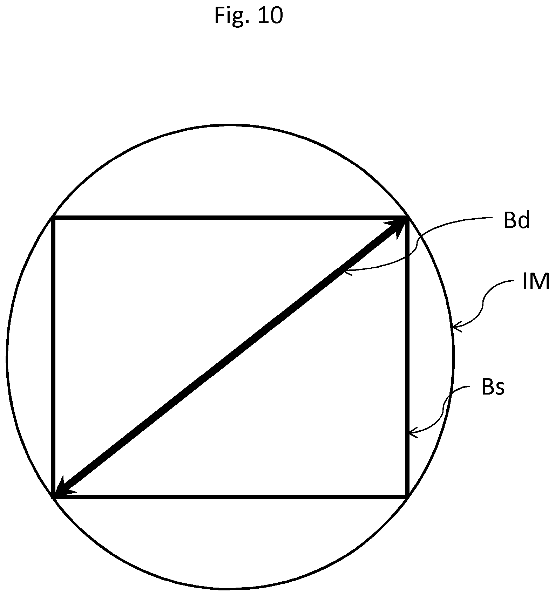

- Fig. 10: einen Bildsensor in einer Abbildungsebene IM.

Unter den Linsenschnitten der Figuren sind die Bewegungswege der jeweiligen Linsengruppen beim Fokussiervorgang dargestellt. Horizontale Linien stellen die Positionen der Linsengruppen G1, G2, G3, G4 und G5 dar. Die oberen dieser Linien kennzeichnen die Positionen in der Fokuseinstellung Unendlich, die unteren in der Fokuseinstellung auf die kürzeste Objektentfernung und die mittleren in einer mittleren Fokuseinstellung. Die senkrechten Linien sind den ortsfesten Linsengruppen G1, G3 und G5 zugeordnet, die schrägen Linien den verschiebbaren Fokussiergruppen G2 und G4.

Die Linsenschnitte in der Zeichnung sind maßstäblich dargestellt, so dass sich relative Angaben, wie z.B. die in Fig. 1 beim Linsenglied G5L2 in der Linsenmitte erheblich dünnere Materialstärke im Vergleich zur Materialstärke am Linsenrand, mit herkömmlichen geometrischen Mitteln, zeichnerisch feststellen und überprüfen lassen. Ebenso ist auf diese Weise offenbart, dass in Fig. 1 das Linsenglied G1L2 in der Linsenmitte eine um nahezu genau 2-fach (2,11-fach) dickere Materialstärke aufweist als das Linsenglied G1L1. Diese Zusammenhänge ergeben sich für den Fachmann ohne weiteres, so dass sich auch Linsengeometrien entnehmen lassen. Z.B. ist in Fig. 1 dargestellt, dass die von der Objektseite her gesehene erste Linsengruppe G1 aus einer in Lichtrichtung zur Abbildungsebene IM gesehenen Reihenfolge aus zweit, mit ca. der Dicke der ersten Linse G1L1 beabstandeten Konvex-Konkav-Linsen positiver Brechkraft, aufgebaut ist, denen ein Kittglied mit kleinerem Abstand nachfolgend zugeordnet ist, welches aus einer Bikonvexlinse positiver und Bikonkavlinse negativer Brechkraft besteht.

Konkrete Ausführungsbeispiele ergeben sich aus den nachstehenden Tabellen für Objektive mit 90mm, 75mm, 50mm und 24mm Brennweite mit einer Offenblendenzahl von 2 und zwei Objektiven mit 50mm Brennweite und Offenblendenzahl 1,4, wobei die Brennweiten jeweils auf das bekannte Kleinfilmformat (43,3mm Bildkreisdurchmesser) bezogen sind.

| **Fig. 1** | | | | |
|---|---|---|---|---|
| **2/90** | **Brennweite f' [mm]** | **Brechkraft [Dpt.]** | **f'Gr/f'** | **Aufbau** |
| G1 | 176,5 | 5,7 | 2,0 | **+** |
| G2 | 55,0 | 18, 2 | 0,6 | **+** |
| G3 | -91,0 | -11,0 | -1,0 | - |
| G4 | -90,4 | -11,1 | -1,0 | - |
| G5 | 72,1 | 13,9 | 0,8 | **+** |

| **Fig. 2** | | | | |
|---|---|---|---|---|
| **2/75** | **Brennweite f' [mm]** | **Brechkraft [Dpt.]** | **f'Gr/f'** | **Aufbau** |
| G1 | 159,1 | 6,3 | 2,1 | **+** |
| G2 | 55,0 | 18, 2 | 0,7 | **+** |
| G3 | -91,0 | -11,0 | -1,2 | **-** |
| G4 | -96,1 | -10,4 | -1,3 | **-** |
| G5 | 72,1 | 13,9 | 1,0 | **+** |

| **Fig. 3** | | | | |
|---|---|---|---|---|
| **2/24** | **Brennweite f' [mm]** | **Brechkraft [Dpt.]** | **f'Gr/f'** | **Aufbau** |
| G1 | -36,5 | -27,4 | -1,5 | **-** |
| G2 | 133,2 | 7,5 | 5,6 | **+** |
| G3 | 18,0 | 55,6 | 0,8 | **+** |
| G4 | -24,9 | -40,2 | -1,0 | **-** |
| G5 | 125,6 | 8,0 | 5,2 | **+** |

| **Fig. 4** | | | | |
|---|---|---|---|---|
| **2/50** | **Brennweite f' [mm]** | **Brechkraft [Dpt.]** | **f'Gr/f'** | **Aufbau** |
| G1 | -83,9 | -11,9 | -1,7 | **-** |
| G2 | 63,0 | 15,9 | 1,3 | **+** |
| G3 | 29,9 | 33,5 | 0,6 | **+** |
| G4 | -66,1 | -15,1 | -1,3 | **-** |
| G5 | -84,8 | -11,8 | -1,7 | **-** |

| **Fig. 5** | | | | |
|---|---|---|---|---|
| **2/24** | **Brennweite f' [mm]** | **Brechkraft [Dpt.]** | **f'Gr/f'** | **Aufbau** |
| G1 | -37,6 | -25,6 | -1,6 | **-** |
| G2 | 105,1 | 9,5 | 4,4 | **+** |
| G3 | 18,4 | 54,3 | 0,8 | **+** |
| G4 | -42,4 | -23,6 | -1,8 | **-** |
| G5 | -499,2 | -2,0 | -20,8 | **-** |

| **Fig. 6** | | | | |
|---|---|---|---|---|
| **2/90** | **Brennweite f' [mm]** | **Brechkraft [Dpt.]** | **f'Gr/f'** | **Aufbau** |
| G1 | 64,9 | 15,4 | 0,7 | **+** |
| G2 | -61,3 | -16,3 | -0,7 | **-** |
| G3 | 32,4 | 30,9 | 0,4 | **+** |
| G4 | -76,5 | -13,1 | -0,8 | **-** |
| G5 | -111,2 | -9,0 | -1,2 | **-** |

| **Fig. 7** | | | | |
|---|---|---|---|---|
| **2/90** | **Brennweite f' [mm]** | **Brechkraft [Dpt.]** | **f'Gr/f'** | **Aufbau** |
| G1 | 53,1 | 18,8 | 0,6 | **+** |
| G2 | -36,4 | -27,5 | -0,4 | **-** |
| G3 | 78,8 | 12,7 | 0,9 | **+** |
| G4 | 79,8 | 12,5 | 0,9 | **+** |
| G5 | -68,0 | -14,7 | -0,8 | **-** |

| **Fig. 8** | | | | |
|---|---|---|---|---|
| **1.4/50** | **Brennweite f' [mm]** | **Brechkraft [Dpt.]** | **f'Gr/f'** | **Aufbau** |
| G1 | 80,9 | 12,4 | 1,6 | **+** |
| G2 | -78,5 | -12,7 | -1,6 | **-** |
| G3 | 56,7 | 17,6 | 1,1 | **+** |
| G4 | 108,4 | 9,2 | 2,2 | **+** |
| G5 | -87,9 | -11,4 | -1,8 | **-** |

| **Fig. 9** | | | | |
|---|---|---|---|---|
| **1.4/50** | **Brennweite f' [mm]** | **Brechkraft [Dpt.]** | **f'Gr/f'** | **Aufbau** |
| G1 | 581,0 | 1,7 | 11,6 | **+** |
| G2 | 95,1 | 10,5 | 1,9 | **+** |
| G3 | 62,5 | 16,0 | 1,3 | **+** |
| G4 | 106,3 | 9,4 | 2,1 | **+** |
| G5 | -104,3 | -9,6 | -2,1 | **-** |

## Patentansprüche

1. Objektiv fester Brennweite, bestehend aus fünf Linsengruppen, wobei drei (G1, G3, G5) ortsfest und zwei (G2, G4) entlang einer optischen Achse verschiebbar gelagert sind, **dadurch gekennzeichnet, dass**
a) eine von einer Objektseite her gesehen erste Frontlinsengruppe (G1) positiver Brechkraft ortsfest,
b) eine zweite Linsengruppe als Fokussiervordergruppe (G2) mit positiver Brechkraft verschiebbar,
c) eine eine in ihrer Öffnung verstellbare ortsfeste Irisblende (AP) enthaltende dritte Linsengruppe positiver Brechkraft als Mittelgruppe (G3) ortsfest,
d) eine vierte Linsengruppe als Fokussierhintergruppe (G4) mit positiver Brechkraft verschiebbar und
e) eine fünfte Hinterlinsengruppe (G5) negativer Brechkraft ortsfest
bezüglich einer Abbildungsebene (IM) in einem Objektivtubus angeordnet sind und sowohl die Fokussiervordergruppe (G2) als Einzellinse als auch die Fokussierhintergruppe (G4) als Einzellinse zum Fokussieren des Objektivs auf Objekte in unterschiedlichen Objektentfernungen gemeinsam relativ zueinander und zu den ortsfest angeordneten Linsengruppen (G1, G3, G5) bewegbar sind, und die ortsfeste Irisblende (AP) zwischen einem ersten Linsenduplett (G3L1, G3L2) und dem dritten Linsenglied (G3L3) der Mittelgruppe angeordnet ist.

2. Objektiv nach Anspruch 1, **dadurch gekennzeichnet, dass** sich sowohl die Fokussiervordergruppe (G2) als auch die Fokussierhintergruppe (G4) beim Fokussieren von Unendlich in die Naheinstellung von der Abbildungsebene (IM) entfernen.

3. Objektiv nach einem der vorhergehenden Ansprüche, **dadurch gekennzeichnet, dass**
a) das Verhältnis f1/f der Brennweiten f1 der Frontlinsengruppe (G1) und f des gesamten Objektivs im Bereich zwischen 0,5 <= f1/f <= 2,1 liegt,
b) das Verhältnis f2/f der Brennweiten f2 der Fokussiervordergruppe (G2) und f des gesamten Objektivs im Bereich zwischen 1 <= f2/f <= 10 liegt,
c) das Verhältnis f3/f der Brennweiten f3 der Mittelgruppe (G3) und f des gesamten Objektivs im Bereich zwischen 0,2 <= f3/f <= 5,0 liegt,
d) das Verhältnis f4/f der Brennweiten f4 der Fokussierhintergruppe (G4) und f des gesamten Objektivs im Bereich zwischen 0,6 <= f4/f <= 0,9 liegt,
e) das Verhältnis f5/f der Brennweiten f5 der Hinterlinsengruppe (G5) und f des gesamten Objektivs im Bereich zwischen -28 <= f5/f <= -0,6 liegt.

4. Objektiv nach einem der vorhergehenden Ansprüche, **dadurch gekennzeichnet, dass** das Objektiv ein Verhältnis der Gesamtbrennweite f zum Bildkreisdurchmesser in der Abbildungsebene (IM) zwischen 0,3 und 5 aufweist.

5. Objektiv nach einem der vorhergehenden Ansprüche, **dadurch gekennzeichnet, dass** das Verhältnis V des Volumens der jeweiligen Fokussierglieder (G2, G4) zum Bildkreisdurchmesser (Bd) in der Abbildungsebene (IM) in der dritten Potenz unter 0,1 (V / Bd³ < 0,1), insbesondere unter 0,08 liegt oder das Gewicht der jeweiligen Fokussiergruppe (G2, G4) unter 15 g (Gramm) liegt.

6. Objektiv nach einem der vorhergehenden Ansprüche, **dadurch gekennzeichnet, dass** entweder
a) die Frontlinsengruppe (G1) aus einem Linsenglied besteht welches positive Brechkraft aufweist, oder
b) die Frontlinsengruppe (G1) aus zwei Linsengliedern (G1L1, G1L2) besteht, wobei das erste Linsenglied (G1L1) positive und das zweite Linsenglied (G1L2) negative Brechkraft aufweist die zu einem Linsenduplett (G1L1, G1L2) mit positiver Gesamtbrechkraft zusammengefasst sind.

7. Objektiv nach einem der vorhergehenden Ansprüche, **dadurch gekennzeichnet, dass**
die Mittelgruppe (G3) aus sechs Linsengliedern (G3L1, G3L2, G3L3, G3L4, G3L5, G3L6) besteht, wobei das erste Linsenglied (G3L1) positive und das zweite Linsenglied (G3L2) negative Brechkraft aufweist und beide zu einem Linsenduplett (G3L1, G3L2) mit negativer Gesamtbrechkraft zusammengefasst sind, das dritte Linsenglied (G3L3) positive, das vierte Linsenglied (G3L4) negative und das fünfte Linsenglied (G3L5) positive Brechkraft aufweist und das vierte und fünfte Linsenelement zu einem Linsenduplett (G3L4, G3L5) mit negativer Gesamtbrechkraft zusammengefasst sind und das sechste Linsenglied (G3L6) positive Brechkraft aufweist.

8. Objektiv nach einem der vorhergehenden Ansprüche, **dadurch gekennzeichnet, dass**
die Hinterlinsengruppe (G5) aus drei Linsengliedern (G5L1, G5L2, G5L3) besteht, wobei das erste Linsenglied (G5L1) positive, das zweite Linsenglied (G5L2) negative Brechkraft aufweist und beide zu einem Linsenduplett (G5L1, G5L2) mit negativer Gesamtbrechkraft zusammengefasst sind und das dritte Linsenglied (G5L3) negative Brechkraft aufweist.

## Claims

1. Objective of fixed focal length, consisting of five lens groups, wherein three (G1, G3, G5) are spatially fixed and two (G2, G4) are moveable along an optical axis, **characterized in that**
a) a first, as viewed from one object side, front lens group (G1) having a positive refractive power is arranged spatially fixed,
b) a second lens group as a focusing front group (G2) having a positive refractive power is arranged movably,
c) a third lens group having a positive refractive power, which comprises a spatially fixed iris diaphragm (AP) that is adjustable in terms of its opening, as a central group (G3) is arranged spatially fixed,
d) a fourth lens group as a focusing rear group (G4) having a positive refractive power is arranged movably, and
e) a fifth rear lens group (G5) having a negative refractive power is arranged spatially fixed with respect to an imaging plane (IM) in an objective tube, and both the focusing front group (G2) as a single lens and the focusing rear group (G4) as a single lens for focusing the objective on objects at different object distances are movable together relative to each other and to the spatially fixed lens groups (G1, G3, G5), and the spatially fixed iris diaphragm (AP) is arranged between a first lens doublet (G3L1, G3L2) and the third lens element (G3L3) of the central group.

2. Objective according to Claim 1, **characterized in that** both the focusing front group (G2) and the focusing rear group (G4) move away from the imaging plane (IM) when focusing from infinity into the near setting.

3. Objective according to either of the preceding claims, **characterized in that**
a) the ratio f1/f of the focal lengths f1 of the front lens group (G1) to f of the entire objective is in the range between 0.5<=f1/f<=2.1,
b) the ratio f2/f of the focal lengths f2 of the focusing front group (G2) to f of the entire objective is in the range between 1<=f2/f<=10,
c) the ratio f3/f of the focal lengths f3 of the central group (G3) to f of the entire objective is in the range between 0.2<=f3/f<=5.0,
d) the ratio f4/f of the focal lengths f4 of the focusing rear group (G4) to f of the entire objective is in the range between 0.6<=f4/f<=0.9,
e) the ratio f5/f of the focal lengths f5 of the rear lens group (G5) to f of the entire objective is in the range between -28<=f5/f<=-0.6.

4. Objective according to any of the preceding claims, **characterized in that** the objective has a ratio of the total focal length f to the image circle diameter in the imaging plane (IM) between 0.3 and 5.

5. Objective according to any of the preceding claims, **characterized in that** the ratio V of the volume of the respective focusing elements (G2, G4) to the image circle diameter (Bd) in the imaging plane (IM) in the third power is less than 0.1 (V/Bd³<0,1), in particular less than 0.08, or the weight of the respective focusing group (G2, G4) is less than 15 g (grams) .

6. Objective according to one of the preceding claims, **characterized in that** either
a) the front lens group (G1) consists of a lens element which has a positive refractive power, or
b) the front lens group (G1) consists of two lens elements (G1L1, G1L2), wherein the first lens element (G1L1) has a positive and the second lens element (G1L2) has a negative refractive power, which are combined to form a lens doublet (G1L1, G1L2) with a positive total refractive power.

7. Objective according to any of the preceding claims, **characterized in that**
the central group (G3) consists of six lens elements (G3L1, G3L2, G3L3, G3L4, G3L5, G3L6), wherein the first lens element (G3L1) has a positive and the second lens element (G3L2) has a negative refractive power and both are combined to form a lens doublet (G3L1, G3L2) with a negative total refractive power, the third lens element (G3L3)has a positive, the fourth lens element (G3L4) has a negative and the fifth lens element (G3L5) has a positive refractive power, and the fourth and fifth lens element are combined to form a lens doublet (G3L4, G3L5) with a negative total refractive power, and the sixth lens element (G3L6) has a positive refractive power.

8. Objective according to any of the preceding claims, **characterized in that**
the rear lens group (G5) consists of three lens elements (G5L1, G5L2, G5L3), wherein the first lens element (G5L1) has a positive, the second lens element (G5L2) has a negative refractive power and both are combined to form a lens doublet (G5L1, G5L2) with a negative total refractive power, and the third lens element (G5L3) has a negative refractive power.

## Revendications

1. Objectif à distance focale fixe, composé de cinq groupes de lentilles, trois (G1, G3, G5) étant stationnaires et deux (G2, G4) étant montés déplaçables le long d'un axe optique, **caractérisé en ce que**
a) un groupe de lentilles frontales (G1) de puissance positive, situé en premier vu du côté objet, est disposé de manière stationnaire,
b) un deuxième groupe de lentilles en tant que groupe avant de mise au point (G2) de puissance positive est disposé déplaçable,
c) un troisième groupe de lentilles de puissance positive, comprenant un diaphragme à iris (AP) stationnaire à ouverture réglable, en tant que groupe intermédiaire (G3) est disposé de manière stationnaire,
d) un quatrième groupe de lentilles en tant que groupe arrière de mise au point (G4) de puissance positive est disposé déplaçable, et
e) un cinquième groupe de lentilles arrière (G5) de puissance négative est disposé stationnaire par rapport à un plan de formation d'image (IM) dans un tube d'objectif, et aussi bien le groupe avant de mise au point (G2) en tant que lentille unique que le groupe arrière de mise au point (G4) en tant que lentille unique sont mobiles ensemble l'un par rapport à l'autre et par rapport aux groupes de lentilles disposés stationnaires (G1, G3, G5) pour mettre l'objectif au point sur des objets à différentes distances d'objet, et le diaphragme à iris (AP) stationnaire est disposé entre un premier doublet de lentilles (G3L1, G3L2) et le troisième élément de lentille (G3L3) du groupe intermédiaire.

2. Objectif selon la revendication 1, **caractérisé en ce qu'**aussi bien le groupe avant de mise au point (G2) que le groupe arrière de mise au point (G4) s'éloignent du plan de formation d'image (IM) lors de la mise au point de l'infini à la distance de mise au point minimale.

3. Objectif selon l'une quelconque des revendications précédentes, **caractérisé en ce que**
a) le rapport f1/f des distances focales f1 du groupe de lentilles frontales (G1) et f de l'objectif tout entier se situe dans la plage de 0,5 <= f1/f <= 2,1,
b) le rapport f2/f des distances focales f2 du groupe avant de mise au point (G2) et f de l'objectif tout entier se situe dans la plage de 1 <= f2/f <= 10,
c) le rapport f3/f des distances focales f3 du groupe intermédiaire (G3) et f de l'objectif tout entier se situe dans la plage de 0,2 <= f3/f <= 5,0,
d) le rapport f4/f des distances focales f4 du groupe arrière de mise au point (G4) et f de l'objectif tout entier se situe dans la plage de 0,6 <= f4/f <= 0,9,
e) le rapport f5/f des distances focales f5 du groupe de lentilles arrière (G5) et f de l'objectif tout entier se situe dans la plage de -28 <= f5/f <= -0,6.

4. Objectif selon l'une quelconque des revendications précédentes, **caractérisé en ce que** l'objectif présente un rapport de la distance focale totale f au diamètre du cercle d'image dans le plan de formation d'image (IM) compris entre 0,3 et 5.

5. Objectif selon l'une quelconque des revendications précédentes, **caractérisé en ce que** le rapport V du volume des éléments de mise au point respectifs (G2, G4) au diamètre du cercle d'image (Bd) dans le plan de formation d'image (IM) à la troisième puissance est inférieur à 0,1 (V / Bd³ < 0,1), en particulier inférieur à 0,08, ou le poids du groupe de mise au point respectif (G2, G4) est inférieur à 15 g (grammes) .

6. Objectif selon l'une quelconque des revendications précédentes, **caractérisé en ce que**
a) le groupe de lentilles frontales (G1) est composé d'un élément de lentille qui présente une puissance positive, ou
b) le groupe de lentilles frontales (G1) est composé de deux éléments de lentille (G1L1, G1L2), le premier élément de lentille (G1L1) présentant une puissance positive et le deuxième élément de lentille (G1L2) présentant une puissance négative et étant regroupés en un doublet de lentilles (G1L1, G1L2) de puissance totale positive.

7. Objectif selon l'une quelconque des revendications précédentes, **caractérisé en ce que**
le groupe intermédiaire (G3) est composé de six éléments de lentille (G3L1, G3L2, G3L3, G3L4, G3L5, G3L6), le premier élément de lentille (G3L1) présentant une puissance positive et le deuxième élément de lentille (G3L2) présentant une puissance négative et les deux étant regroupés en un doublet de lentilles (G3L1, G3L2) de puissance totale négative, le troisième élément de lentille (G3L3) présentant une puissance positive, le quatrième élément de lentille (G3L4) présentant une puissance négative et le cinquième élément de lentille (G3L5) présentant une puissance positive et le quatrième et le cinquième élément de lentille étant regroupés en un doublet de lentilles (G3L4, G3L5) de puissance totale négative, et le sixième élément de lentille (G3L6) présentant une puissance positive.

8. Objectif selon l'une quelconque des revendications précédentes, **caractérisé en ce que**
le groupe de lentilles arrière (G5) est composé de trois éléments de lentille (G5I1, G5L2, G5L3), le premier élément de lentille (G5L1) présentant une puissance positive, le deuxième élément de lentille (G5L2) présentant une puissance négative et les deux étant regroupés en un doublet de lentilles (G5L1, G5L2) de puissance totale négative, et le troisième élément de lentille (G5L3) présentant une puissance négative.
